Europäisches Patentamt

European Patent Office

Office européen des brevets

(11) Publication number: **0 358 348**
**A2**

## EUROPEAN PATENT APPLICATION

(21) Application number: 89308270.1

(22) Date of filing: 15.08.89

(51) Int. Cl.5: **B64D 33/02**

(30) Priority: 09.09.88 GB 8821281

(43) Date of publication of application:
14.03.90 Bulletin 90/11

(84) Designated Contracting States:
DE FR GB

(71) Applicant: BRITISH AEROSPACE PUBLIC
LIMITED COMPANY
11 Strand
London WC2N 5JT(GB)

(72) Inventor: Willmer, Anthony Cecil
British Aerospace (Commercial Aircraft) Ltd.
Filton House Bristol BS99 7AR(GB)

(54) Aft spill ramjet.

(57) In an aerospace vehicle designed to operate in the high Mach number ranges, a variable geometry air intake ramp is used to control the mass flow of intake air to the vehicles powerplant or to close off the air intake duct when required. In the transonic flight mode a spillage of excess intake flow particularly occurring around the air intake lip can result in fore-spill drag. To alleviate this condition the present invention provides an arrangement whereby at least some of the spill flow is directed into an aft spill ramjet where it is progressively mixed with burning gases and discharged from the ramjet nozzle to give a supplementary effective thrust to the vehicle.

FIG. 2

## AFT SPILL RAMJET

This invention relates to aft spill ramjets. More particularly it concerns an arrangement whereby, in an aerospace vehicle designed to operate in the high Mach number ranges, the aft spill intake air flow, which arises in the transonic flight mode, is diverted by variable ramp air intake means into a bypass ram jet, compressed and mixed downstream with burning gases and discharged from a jet nozzle thereby providing useful supplementary thrust on the vehicle and significantly reducing fore-spill drag.

According to the present invention there is provided an aerospace vehicle having propulsion powerplant means, air intake control means and aft spill ramjet means, said air intake control means including variable geometry ramp means adaptable to control the mass flow of intake air to said propulsion powerplant means at high Mach numbers, to direct intake air aft-spill flow to said aft spill ramjet means in the transonic flight mode or to close off said air intake duct as required, said aft spill ramjet including a flow duct, heating means within said flow duct and thrust nozzle means, said heating means comprising two or more rows of gas burners spaced apart from each other in a downstream sense and gas supply means connected to said gas burners for receiving a supply of gas from source, characterised in that in the transonic flight mode aft spill flow is directed by said variable geometry ramp means into said flow duct mixed with burning gas in progression along the duct and discharged through said thrust nozzle.

One embodiment of the invention will now be described, by way of example only, and with reference to the following drawings in which:-

Figure 1 illustrates diagrammatically a variable air intake arrangement for an aerospace vehicle in accordance with the present invention.

Figure 2 illustrates pictorially the same variable air intake arrangement.

Figure 3 is a side elevation on an aft spill ramjet installation in accordance with the present invention.

Figure 4 is a plan view on the installation viewed in direction of arrow 4 in Figure 3.

Figure 5 is a part end elevation on the installation viewed in direction of arrow 5 in Figure 3.

Figure 6 is a part cross-section through the aft spill ramjet at a first gas ring station taken along a line '6-6' in Figure 4.

Figure 7 is a further part cross-section at a second gas ring station taken along a line '7-7' in figure 4.

Figure 8 is a further part cross-section at a third gas ring station taken along a line '8-8' in Figure 4.

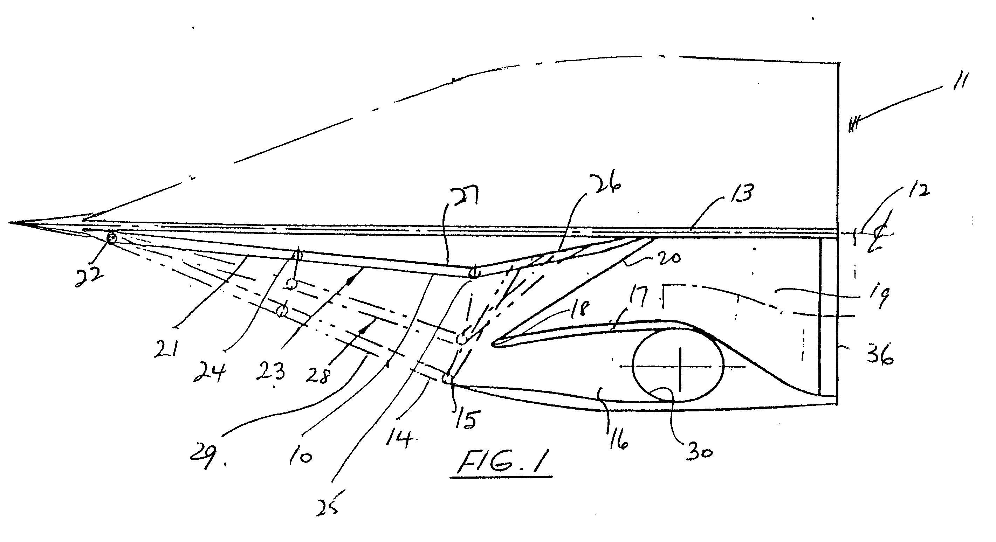

Referring to the drawings, Figure 1 illustrates diagrammatically, in half plan view, an air intake arrangement 10 for an aerospace vehicle 11, the arrangement being symmetrical about the longitudinal ₵ 12 along which is located a longitudinal diaphragm 13. The air intake opening is defined by the diaphragm 13, the lower lip profile 14 of the vehicle and the air intake lip 15. This air intake lip 15 further defines the forward extremity of the air intake diffuser duct 16 whose inner boundary is defined at 17 having a splitter lip 18 positioned rearwardly of the lip 15, the diffuser duct 16 supplying intake air to the propulsion engine (not shown) via ducts 30. The area between the diffuser duct 16 and the diaphragm 13 comprises an aft spill ramjet duct 19 having a sharply raked splitter 20. Variable geometry air intake ramps comprise, in this embodiment, a ramp panel 21 pivotally located at its forward extremity 22 to the fixed structure, an intermediate ramp panel 23 having a forward pivotal attachment 24 to panel 21 and a rearward pivotal attachment 25 to a rear ramp panel 26, this rear panel 26 slidingly engaging the diaphragm 13 by means not shown to accommodate the variable geometry.

Three variable geometry settings are illustrated in Figure 1, the transonic setting 27, the high mach number intermediate setting 28 and the fully closed-off intake position 29. The significance of these settings will be later described.

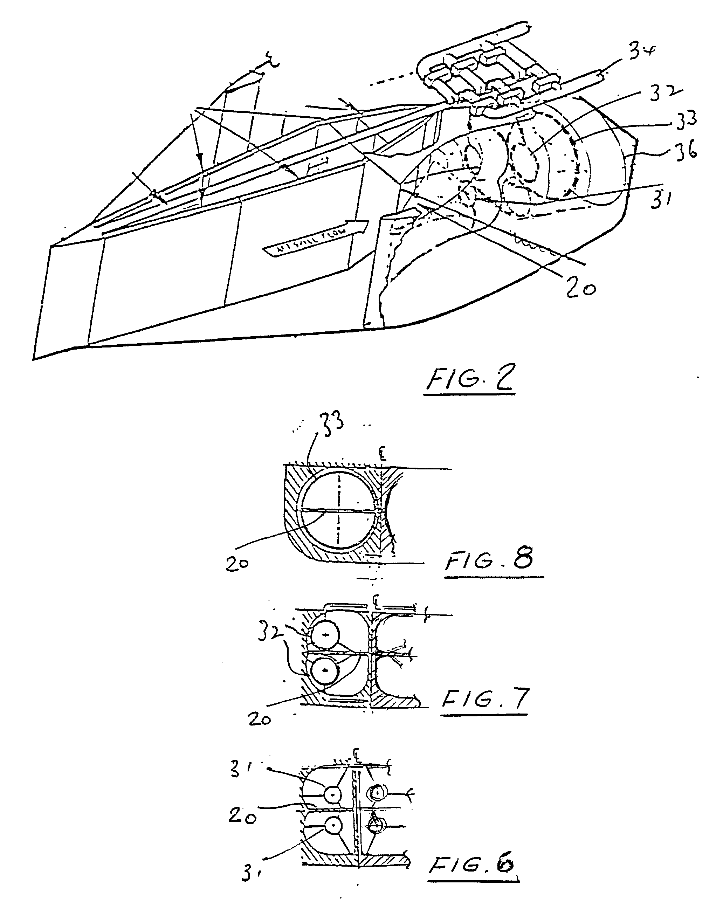

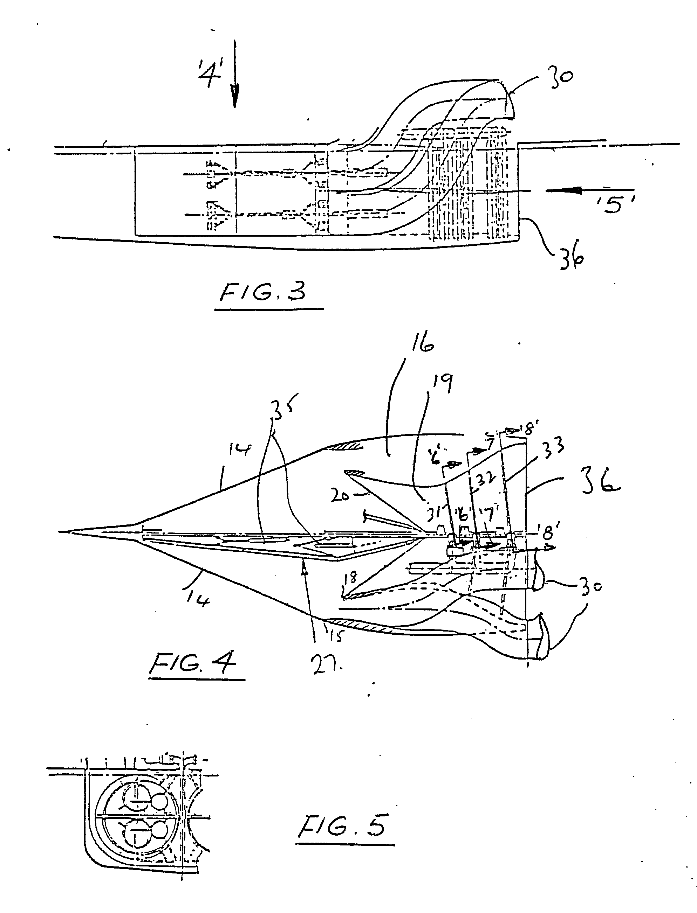

Now referring to Figure 2-8 inclusive, Figures 2 and 4 show the variable geometry air intake ramp in its transonic setting 27. The aft spill ramjet duct 19 is split into upper and lower duct portions by a duct splitter web 20 each incorporating a series of gas rings for progressive heating within the duct. These comprise first stage gas rings 31, second stage gas rings 32 and a third stage gas ring 33 receiving gas supplied from source via piped system 34.

In Figures 3 and 4 is schematically illustrated the operating mechanism 35 for achieving variable ramp displacement giving progressive closure from the transonic setting 27 to the fully closed position 29.

The configuration described constitutes a bypass ramjet and means for directing aft spill flow to the ramjet as a means of eliminating fore-spill drag. Such a condition arises because, at high Mach numbers, approaching or in excess of Mach 5, air intakes demand large mass flows but in the transonic range there will be a spillage of excess intake flow, comprising fore-spill flow, particularly occurring around the air intake lips 15 resulting in the said fore-spill drag. By means of the variable ramp intake, some of this potential spillflow can be beneficially swallowed by the intake and directed into the aft spill ramjet duct 19 progressively mixing with burning gases at the burner stages 31-33 inclusive and discharged from the nozzle 36 with a resultant effective thrust.

## Claims

1 An aerospace vehicle having propulsion powerplant means, air intake control means and aft spill ramjet means, said air intake control means including variable geometry ramp means adaptable to control the mass flow of intake air to said propulsion powerplant means at high Mach numbers, to direct intake air aft spill flow to said aft spill ramjet means in the transonic flight mode or to close off said air intake duct as required, said aft spill ramjet means including a flow duct, heating means within said flow duct and thrust nozzle means, said heating means comprising one or more rows of gas burners spaced apart from each other in a downstream sense and gas supply means connected to said gas burners for receiving a supply of gas from source, characterised in that in the transonic flight mode aft spill flow is directed by said variable geometry ramp means into said flow duct mixed with burning gas in progression along the duct and discharged through said thrust nozzle.

2 An aerospace vehicle according to Claim 1 in which said flow duct is longitudinally divided into upper and lower duct portions of substantially equal cross-sectional area by means of a splitter plate and said splitter plate has a sharply raked leading edge.

3 An aerospace vehicle according to Claim 1 or Claim 2 in which each of said rows of gas burners comprises one or more burner rings.

4 An aerospace vehicle according to Claim 3 in which one or more burner rings in each of said rows of gas burners is individually located in each of said upper and lower duct portions.

5 An aerospace vehicle according to Claim 3 in which one or more of said rows of gas burners comprises a single burner ring symmetrically disposed about said splitter plate and located substantially adjacent the periphery of said flow duct.

FIG. 1

EP 0 358 348 A2

FIG. 2

FIG. 8

FIG. 7

FIG. 6

FIG. 3

FIG. 4

FIG. 5